# EUROPEAN PATENT SPECIFICATION

(11) **EP 2 788 995 B1**
(45) Date of publication and mention of the grant of the patent: **14.03.2018**
(21) Application number: 11805606.8
(22) Date of filing: 08.12.2011
(51) Int. Cl.: H01G 9/20

(54) **SEMICONDUCTOR ELECTRODE COMPRISING A BLOCKING LAYER**
HALBLEITERELEKTRODE MIT EINER BLOCKIERSCHICHT
ÉLECTRODE À SEMI-CONDUCTEUR COMPRENANT UNE COUCHE DE BLOCAGE

(43) Date of publication of application: 15.10.2014
(73) Proprietor: Ecole Polytechnique Fédérale de Lausanne (EPFL), 1015 Lausanne (CH)
(72) Inventor: CHANDIRAN, Aravind, Kumar, Berkeley, CA 94703 (US); NAZEERUDDIN, Mohammad, Khaja, 1024 Ecublens (CH); GRAETZEL, Michael, 1025 St-Sulpice (CH)
(74) Representative: Ganguillet, Cyril
(86) International application number: PCT/IB2011/055550
(87) International publication number: WO 2013/084029

(56) References cited:
- US-A1- 2010 200 051
- US-A1- 2010 294 350
- SHANMUGAM M ET AL: "Effect of atomic layer deposited ultra thin HfO2 and Al2O3 interfacial layers on the performance of dye sensitized solar cells", THIN SOLID FILMS, ELSEVIER-SEQUOIA S.A. LAUSANNE, CH, vol. 518, no. 10, 1 March 2010 (2010-03-01), pages 2678-2682, XP026903592, ISSN: 0040-6090, DOI: 10.1016/J.TSF.2009.08.033 [retrieved on 2009-08-26] cited in the application
- SANDRA M. FELDT ET AL: "Effects of Driving Forces for Recombination and Regeneration on the Photovoltaic Performance of Dye-Sensitized Solar Cells using Cobalt Polypyridine Redox Couples", JOURNAL OF PHYSICAL CHEMISTRY C, vol. 115, no. 43, 23 September 2011 (2011-09-23), pages 21500-21507, XP55021976, ISSN: 1932-7447, DOI: 10.1021/jp2061392 cited in the application

## Description

### Technical Field

The present invention relates to a dye-sensitized solar cell (DSC), to a method for preparing a semiconductor electrode and/or a photoanode, to a method for producing a DSC, to the use of a precursor material for the preparation of a blocking and/or insulating layer on the surface of a semiconductor material and to the use of a metal oxide as a blocking and/or insulating layer at the surface of a semiconductor material.

### Prior Art and the Problem Underlying the Invention

Dye-sensitized solar cells (DSC) have been attracted by energy market and researchers due to the flexibility it offers for the material selection, low cost and chemical stability. The most common lab-scale system contains dye-sensitized mesoporous titania (or another semiconductor material) printed on a TCO glass and a platinum coated counter electrode sandwiched with a redox electrolyte in between. The solar photons with the energy equal to or more than the HOMO-LUMO gap of the dye is absorbed generating an electron-hole pair.

In general, the separation of charge pairs in a DSC occurs at the semiconductor-sensitizer-electrolyte interface where the electron (e⁻ₚₕₒₜₒ) is injected into the conduction band of the semiconductor and the holes into the electrolyte. In solid state DSCs (ssDSCs) an organic, hole transporting material is used instead of an electrolyte. The e⁻ₚₕₒₜₒ traverses through the series of semiconductor nano particles of the semiconductor material and reaches the counter electrode via the external circuit, thereby regenerating the oxidized electrolyte species leaving no chemical changes in the cell after the whole photovoltaic cycle.

The present inventors believe that the short-circuit photocurrent density (J_{SC}) of the cell is determined by the light harvesting ability of the dye over the whole visible light region and the open-circuit potential (V_{OC}) is reflected by the difference in the quasi-Fermi level of the semiconductor material of the photoanode (for example TiO₂) and the redox potential of the electrolyte.

The distinct property of the separation of the photon absorption from the charge transport opened up a new avenue on the photovoltaic research arena to concentrate on harnessing the whole solar spectrum without being concerned about the carrier transport phenomena, unlike their p-n junction counterparts. Until recently, research efforts focused mainly on synthesizing panchromatic Ru(II) polypyridyl sensitizers. But no significant advancement in the overall power conversion efficiency (PCE) is achieved with the standard iodide/tri-iodide electrolyte and a saturation is experienced in terms of PCE.

However, the introduction of organic or porphyrin dyes with the finely tuned donors, π and acceptor groups coupled with the alternate single electron redox shuttles like ferrocene or cobalt complexes ran over the existing limits exerting a new record PCE of 12.3 % at 1 sun and 13.1 % at 0.5 sun (Daeneke, T., et al., Nature Chemistry 3, 211-215 (2011); Yella, A., et al., Science, 334, 629-634 (2011); Feldt, S.M., et al., J. Am. Chem. Soc. 132, 16714-16724 (2010)).

The panchromatic absorption in most of the existing high efficient dyes is still limited between 350 nm and 850 nm due to the constraints imposed by the over-potentials needed for the electron injection and the dye regeneration and eventually the J_{SC} is limited (Peter, L.M. Phys. Chem. Chem. Phys. 9, 2630-2642 (2007); Listorti, A., et al., Chem. Mater. 23, 3381-3399 (2011)).

But on the other hand, cobalt complex based redox mediators significantly enhances the V_{OC}, as they can have more positive redox potentials (Vs. NHE) and also require less dye regeneration over-potentials (Feldt, S.M., et al., J. Phys. Chem. C. 115, 21500-21507 (2011)).

In spite of the positive aspects of the Co(II/III) complexes, recombination of photo generated electrons with the oxidized species in the electrolyte dominates compared to the two electron iodide/tri-iodide, at open-circuit, reducing the V_{OC} (Nakade, S., et al., J. Phys. Chem. B. 109, 3480-3487 (2005); Nakade, S., et al., J. Phys. Chem. B. 109, 3488-3493 (2005)).

The conventional approach of employing organic coadsorbents, like chenodeoxycholic acid and dineohexyl phosphinic acid, which are known for their dye deaggregating property also helped in passivating the titania surface blocking the back reaction. But the coadsorbing molecules have their inherent disadvantage of reducing the dye uptake on the titania surface and the kinetics of dye to coadsorbent uptake on the semiconductor film from the solution is difficult to control (Wang, M., et al., Dalton Trans. 10015-10020 (2009)).

The passivation of oxide surface by insulating layers, in some cases, is shown to be efficient in blocking the kinetics of the back reaction, but it is not prevalently used due to limitations of achieving the ultrathin conformal layer deposition on the porous films by the conventional solution coating techniques (Kay, A. & Grätzel, M., Chem. Mater. 14, 2930-2935 (2002)).

The development of the atomic layer deposition (ALD) for the reproducible growth of ultrathin and conformal films, down to the atomic layer thickness urged the DSC researchers to revisit the technology to block the back reaction (Li, T.C., et al., J. Phys. Chem. C. 113, 18385-18390 (2009); Devries, M.J., Pellin, M.J. & Hupp., J.T. Langmuir 26, 9082-9087 (2010)).

ALD involves the self-limited growth process and is determined by the number of the surface reactive sites that are present on the depositing substrate. Introducing the metal and oxidizing precursors in the reaction chamber at two different stages with an inert gas purge in between, avoids any gas phase reaction in the reactor (George, S.M. Chem. Rev. 110, 111-131 (2010); Leskelä, M. & Ritala, M., Thin solid films 409, 138-146 (2002)).

Some reports involving the use of ALD over layers like ZrO₂, HfO₂ and Al₂O₃ on the titania have been published for I₃⁻/I⁻ based DSC. However, no dramatic improvement in arresting the recombination is observed. Recently, Leskela et al. employed alumina as the passivation layer and do not observe any blocking effect with iodide/tri-iodide DSC, although the electron injection from the LUMO is reduced. The reason is shown to be the slower back reaction kinetics for latter redox couple which follows two step electrochemical processes for reduction. More information is found in the following references: Antila, L.J., et al., J. Phys. Chem. C 115, 16720-16729 (2011); O'Regan, B.C., et al., J. Phys. Chem. B 109, 4616-4623 (2005); Hamann, T.W., Farha, O.K. & Hupp, J.T. J. Phys. Chem. C 112, 19756-19764 (2008); Shanmugam, M., Baroughi, M.F. & Galipeau, D. Thin solid films 518, 2678-2682 (2010), for example. In particular Shanmugam et al. is directed to the improvement of the performance of DSCs by ALD-deposition utlrathin layers of metal oxides (HfO₂ or Al₂O₃) on mesoporous TiO₂ to treat this mesoporous surface and the interface TiO₂/dye/electrolyte in order to reduce the recombination losses in DSCs. Further US 2010/0200051 A1 teaches an effective ALD coating of a large surface area within a porous nanoparticulate layer while maintaining high surface area for dye adsorption to improve the performance of DSCs. In US 2010/0204350 A1, a conductive non-metal film, which may include metal oxide, being ALD-deposited, functions as a transparent electrode in a photoelectrode having advanced transmittance without scattering of incident light, that retains a high level of electrical conductivity in the film, and which is porous type that can have smooth movement of an electrolyte.

The present invention addresses the problems depicted above.

In particular, the invention addresses the problem of obtaining a solar cell having higher power conversion efficiencies (PCEs).

The invention also addresses the problem of providing more stable DSCs.

More specifically, the invention addresses the problem of increasing the open-circuit potential (V_{OC}) of solar cells, in particular of a DSC.

In particular, the invention addresses the problem of increasing V_{OC} while substantially keeping unchanged or increasing the short-circuit photocurrent density (J_{SC}) of a DSC.

It is a further objective of the invention to reduce recombination of electrons in the semiconductor material of a DSC, in particular those created by photons, with an oxidized species in the electrolyte or with holes of an organic charge transporting material in the charge transfer (or transport) medium.

The present invention also seeks at improving the characteristics or properties of the blocking and/or insulating properties of metal-oxide based layers on the surface of semiconductor materials, such as those used in DSCs. It is a goal to provide a layer, such as a metal oxide, insulating and/or blocking layer that prevents charge recombination but at the same time does not reduce charge injection from the dye to the semiconductor material.

It is an objective of the invention to passivate the semiconductor electrode of a DSC maintaining the level or amounts of dye adsorbed on the surface of the semiconductor electrode and/or insulating layer. It is an objective to provide a material that can be used as a blocking layer and which is also suitable for adsorbing a dye thereon as applicable in a DSC.

It is an objective of the invention to provide a blocking layer that allows tunnelling of electrons from the dye to the semiconductor material, but which at the same time prevents the injected electron from moving back to the redox shuttle of the electrolyte or to another oxidized species or the hole conductor in the charge transport medium of a DSC.

It is a further objective of the invention to seek advantageous materials for providing a blocking layer and/or understanding the unfavourable results achieved in the prior art reported herein with certain blocking layer materials, such as aluminium oxide and the like. It is also an objective to provide materials or ways that allow for the preparation of conformal, even, and/or regular blocking layers on the semiconductor material of the photoanode of a DSC.

Without wishing to be bound by theory, the inventors believe that one shortcoming in the blocking layers reported in the prior art, in particular those deposited by ALD is that aluminium oxide, which is frequently used as a metal oxide material, exhibits irregular and/or non-conformal growth, resulting in reduction of current.

It is an objective of the invention to remove the shortcomings observed in the prior art, in particular in terms of PCE or reduced J_{SC}.

Furthermore, the invention addresses the problem of reducing recombination of electrons from the current collector (for example, semiconductor nano particles, FTO glass or plastic) to the oxidized redox mediators. Ellectrons are collected at the current collector or electrical contact from the semiconductor interface, so recombination at this interface can be important. It would be advantageous to provide a way of blocking the back reaction from the current collector.

The goals, objectives and problems of the invention, in particular as described above, are part of the uses and methods of the invention, and the invention is directed to uses and methods addressing these goals, objectives and problems.

### Summary of the Invention

Remarkably, the inventors present a novel way of utilizing metal oxides as defined herein, such as gallium oxide, as a layer provided on a semiconductor electrode. Such electrodes may be used in dye-sensitized solar cells (DSCs). When using the modified semiconductor electrode in a DSC with a single electron redox shuttle in the electrolyte and with a standard organic dye, the inventors reached a new record open-circuit potential of 1.1 V without losing the short-circuit current density.

In a first aspect, the present invention provides a dye-sensitized solar cell (DSC) comprising a semiconductor electrode, a counter electrode, a dye, and, between said semiconductor electrode and said counter electrode, a charge transport medium comprising an electrolyte comprising a single electron redox couple, wherein said semiconductor electrode comprises a porous semiconductor material and a blocking and/or insulating layer being a metal oxide layer provided on said porous semiconductor material and having an overall thickness from 0.2 to 0.8 nm, wherein said metal oxide layer being free of aluminum oxide comprises 3 to 4 distinct metal oxide layers having a thickness of less than 0.2 nm each and comprises a material selected from Ga-oxide, wherein the dye is adsorbed on said metal oxide layer, wherein the blocking layer and/or insulating layer and the semiconductor electrode are made from different material and wherein said single electron redox couple is selected from inorganic metal complexes or organic molecules, metal complexes selected from ferrocene complexes, cobalt complexes, organic molecules thiolates, and from TEMPO (2,2,6,6-tetramethyl-1-piperidinyloxy), 2,2'7,7'-tetrakis-(N,N-di-*p*-methoxyphenyl-amine)-9,9'-spirobifluorene (spiro-MeOTAD), other liquid hole transporting materials, hole-conductive polymer P3HT, and Poly(3,4-ethylenedioxythiophene).

In a futher aspect, the present invention provides a method for manufacturing a dye-sensitized solar cell (DSC), said method comprising the steps of providing a semiconductor electrode comprising a mesoporous surface, on which a blocking and/or insulating layer being a metal oxide layer having an overall thickness from 0.2 to 0.8 nm is provided by way of Atomic Layer Deposition (ALD), and wherein said metal oxide layer being free of aluminum oxide comprises 3 to 4 ALD-deposited metal oxide layers having a thickness of less than 0.2 nm each, said metal oxide being selected from Ga-oxide, the blocking layer and/or insulating layer and the semiconductor electrode being made from different material; applying, in particular adsorbing, a dye on said metal oxide layer; providing a counter electrode; and, providing, between said metal oxide layer having an overall thickness of 0.2 to 0.8 nm and said counter electrode, a charge transport medium comprisings an electrolyte comprising a single electron redox couple, wherein said single electron redox couple is selected from inorganic metal complexes or organic molecules, metal complexes selected from ferrocene complexes, cobalt complexes, organic molecules thiolates, and from TEMPO (2,2,6,6-tetramethyl-1-piperidinyloxy), 2,2'7,7'-tetrakis-(N,N-di-*p*-methoxyphenyl-amine)-9,9'-spirobifluorene (spiro-MeOTAD), other liquid hole transporting materials, hole-conductive polymer P3HT, and Poly(3,4-ethylenedioxythiophene).

In an aspect, the present invention provides a semiconductor electrode and/or material.

In an aspect, the invention provides a semiconductor material and/or electrode comprising a metal oxide layer.

In an aspect, the invention provides a porous semiconductor material and/or electrode comprising a metal oxide layer.

In an aspect, the invention provides a semiconductor material and/or electrode having a porous surface, and a metal oxide layer provided on said surface.

In an aspect, the invention provides a porous semiconductor material and/or electrode comprising a Ga₂O₃ metal oxide layer, said Ga₂O₃ layer having a thickness of not more tha 1 nm.

In an aspect, the present invention provides a device comprising a semiconductor material and a metal oxide layer provided on said semiconductor material.

In an aspect, the invention provides a dye-sensitized solar cell (DSC) comprising a semiconductor material and a metal oxide layer provided on said semiconductor material.

In an aspect, the present invention provides a dye-sensitized solar cell (DSC) comprising a semiconductor electrode, a counter electrode and, between said semiconductor electrode and said counter electrode, a charge transport medium, wherein said semiconductor electrode comprises a porous semiconductor material and a metal oxide layer provided on said porous semiconductor material.

In another aspect, the present invention provides a dye-sensitized solar cell (DSC) according to claim 1 comprising a semiconductor electrode, a counter electrode and, between said semiconductor electrode and said counter electrode, a charge transport medium, wherein said semiconductor electrode comprises a porous semiconductor material and a metal oxide layer provided on said porous semiconductor material, said metal oxide layer comprising a material selected from Ga-oxide, and having a thickness of not more than 1 nm, and wherein a dye is adsorbed on said metal oxide layer.

In an aspect, the present invention provides a method for manufacturing a DSC, according to claim 5. Further aspects and preferred embodiments of the invention are defined herein below and in the appended claims. Further features and advantages of the invention will become apparent to the skilled person from the description of the preferred embodiments given below.

### Brief Description of the Drawings

**Figure 1** shows X-ray photoelectron spectra of the Ga 2p_{3/2} transition of different ALD Ga₂O₃ layers on the surface of a porous TiO₂ film in accordance with an embodiment of the invention. The increase in the number of cycles of deposition leads to the augmentation of intensity of transition peaks.
**Figure 2** shows X-ray photoelectron spectra of the Ti 2p transition for the reference titania sample, lacking any insulating layer.
**Figure 3** shows J-V curves of dye sensitized solar cells according to the invention with gallium oxide over layers and comparative cells lacking any over layer. The curves with grey symbols correspond to the dark measurements and the curves with solid black lines and symbols correspond to the measurements at AM 1.5 G sun conditions.
**Figure 4** shows the incident photon-to-electron conversion efficiency (IPCE) spectra for the reference cell with bare titania and modified cells with Ga₂O₃ surface treatment (4 cycles) of the embodiments of Figure 3.
**Figure 5** compares the evolution of the recombination rate as the function of open-circuit potentials measured by transient photo-voltage decay technique in DSCs of the invention and a reference cell lacking a metal oxide layer in accordance with embodiments of the invention.
**Figure 6** shows the charge collection efficiency (η_{coll}) plotted as the function of open-circuit potentials for the reference cell and the gallium oxide passivated DSCs according to preferred embodiments of the present invention. The η_{coll} is calculated from the ratio of transport rate to the sum of transport and the recombination rate.

### Detailed Description of the Preferred Embodiments

The device defined in claim 1 is a dye sensitized solar cell (DSC).

According to an embodiment, said DSC, is regenerative.

The device of the invention preferably comprises a semiconductor electrode. The semiconductor electrode comprises, and preferably consists essentially of a semiconductor material. Such semiconductor materials may be selected from the group of Si, TiO₂, SnO₂, Fe₂O₃, ZnO, WO₃, Nb₂O₅, CdS, ZnS, PbS, Bi₂S₃, CdSe, CdTe, SrTiO₃, GaP, InP, GaAs, CuInS₂, CuInSe₂, and combinations thereof, for example. Preferred semiconductor materials are Si, TiO₂, SnO₂, ZnO, WO₃, Nb₂O₅ and SrTiO₃, for example. In DSCs, TiO₂ is most frequently used. The invention is, however, not intended to be limited to a specific semiconductor material.

The semiconductor electrode may also be referred to as the photoanode and/or the working electrode. In particular in DSCs, the semiconductor electrode is referred to as photoanode. The semiconductor electrode may be considered as a layer, or a plurality of layers forming a functional semiconductor electrode, as many electrochemical devices, such as DSCs, are layered and/or comprise several layers.

On one side, the semiconductor electrode may generally be in contact with a current collector. This current collector may also be considered as a conductive layer. Frequently used materials for the current collector comprise a transparent and conductive metal oxide coated on a plastic or glass substrate, where the transparent metal oxide renders the plastic or glass electrically conductive.

For example, the current collector may comprise a material selected from indium doped tin oxide (ITO), fluorine doped tinoxide (FTO), ZnO-Ga₂O₃, ZnO-Al₂O₃, tin-oxide, antimony doped tin oxide (ATO), SrGeO₃ and zinc oxide, preferably coated on a transparent substrate, such as plastic or glass.

The current collector may also be provided by a conductive metal foil, such as a titanium or zinc foil, for example. Non-transparent conductive materials may be used as current collectors in particular on the side of the device that is not exposed to the light to be captured by the device in case of a DSC. Such metal foils have been used, for example, in flexible devices, such as those disclosed by Seigo Ito et al., Chem. Commun. 2006, 4004-4006.

It is noted that the current collector is sometimes also referred as an electrode, such as a "transparent conductive electrode". For the purpose of the present specification, the term "current collector" is generally preferred in order to distinguish the latter from the working electrode and/or semiconductor electrode, which are generally separate structures made from different materials in DSCs. On the other hand, one may also consider the working electrode comprising the semiconductor material as well as the current collector together as an electrode.

In DSCs, at least part, preferably a major part and most preferably the entire of the semiconductor electrode has a porous structure. In particular, the semiconductor material is mesoporous and/or comprises a mesoporous surface. Generally, the part that faces the counter electrode of the device, and/or the part that is in contact with the charge transport medium is porous. In other words, the part of the semiconductor electrode that is opposite to the side that is in contact with the current collector to which it is connected. This does not mean, however, that the side in contact with the current collector lacks any porosity. Actually, the side in contact with the current collector may also be porous. In DSCs, dye molecules are adsorbed on the porous surface of the semiconductor material, on the side that is in contact with or closer to the charge transport medium. The dyes are on the side that faces the counter electrode and/or which is in contact with the charge transport medium.

The porous semiconductor electrode may be produced by processes described in the art (for example, B. O'Reagan and M. Grätzel, Nature, 1991, 353, 373). According to an embodiment, the semiconductor electrode is produced at least partially from semiconductor nanoparticles, in particular nanocrystalline particles. Such particles generally have a mean diameter of about 0-50nm, for example 5-50 nm. Such nanoparticles may be made from the semiconductor materials mentioned above, for example.

Preferred devices of DSCs comprise one or more than one, for example two and possibly more separate and/or structurally distinguishable or different semiconductor layers made of one or more semiconductor materials. Seigo Ito et al., Thin Solid Films 516 (2008) 4613-4619 disclose a double semiconductor layer system, in which a porous semiconductor film (in particular a nanocrystalline TiO₂ film) is covered with a light-scattering layer or topcoat. For this latter layer, submicrocrystalline TiO₂ was used.

If two or more layers are used, the layers may or may not be obtained from particles with different diameters but preferably from the same material. Furthermore, the layers may have the same or different thickness, which generally lie in the range of 1 to 20 µm per layer. The overall thickness of the semiconductor electrode including all semiconductor material layers is preferably in the range of 5 to 30 µm, preferably 10 to 20 µm.

Porosity of the semiconductor electrode preferably lies in the range of 40% to 80%, meaning that 40% to 80% of the volume are voids. Porosity may be determined using nitrogen sorption measurements, such as disclosed, for example, by Chandiran et al., J. Phys. Chem. C 2011, 115, 9232-9240. Porous semiconductor structures and surfaces have been disclosed, for example, in EP 0333641 and EP 0606453.

In accordance with the invention, defined in claim 1, a metal oxide layer is provided on the surface of said porous semiconductor material and/or layer, on the side facing the charge transport medium and/or the counter electrode. Furthermore, on the porous semiconductor material and/or layer, and more specifically onto the metal oxide layer, a dye is provided. The semiconductor material and the dye form a light absorption layer. According to an embodiment, the metal oxide provided on said semiconductor material has the purpose of passivating the porous semiconductor surface. The metal oxide is provided or may be referred to as a blocking layer and/or insulating layer. The blocking and/or insulating layer is advantageously selected so as to be suitable to reduce the recombination of photo generated electrons in the semiconductor material with holes or oxidized species (in particular the redox couple) in the charge transport medium. More details about the metal oxide layer in particular the way is preferably produced and of which materials it is preferably made are discussed further below.

Between the semiconductor electrode and the counter electrode there is preferably provided a charge transport medium. The charge transport medium generally has the purpose of mediating the regeneration of electrons in the dye, which were removed due to radiation. These electrons are provided by the counter electrode, and the charge transport medium thus mediates the transport of electrons from the counter electrode to the dye, or of holes from the dye to the counter electrode.

The charge transport medium generally also assumes a layer-like configuration or form, in accordance with the generally layered organisation of electrochemical devices such as DSCs. One may thus also use the expression "charge transport layer" for putting the emphasis on the layered structure of the device.

The transport of electrons and/or holes may be mediated by a number of ways, such as, for example, by way of (a) an solvent (preferably organic solvent) based electrolyte (EP 1507307, partly; EP 1 180 774, partly), (b) an ionic liquid-based electrolyte and melts (such as those disclosed in EP 0737358, WO 2007/093961, WO2009/083901), and (c) in solid state devices, by an organic electrically conductive material (for example as disclosed in WO 2007/107961). In the latter, charges are transported by electronic motion and not by material migration / diffusion. In the case of (a) and (b), charges are transported by way of a redox mediator, such as the iodide/triiodide couple or other redox couples, such as cobalt-complex based redox-couples (WO 03/038508), for example. DSCs based on (a) and (b) are generally referred to as "liquid" cells, as opposed to solid state devices (c). According to a preferred embodiment of the invention, the DSC is a liquid cell.

The invention also encompasses charge transport mediums based on melts and/or gel electrolyte.

"Gel electrolytes" or "gel-based electrolytes" may be electrolytes under (a) and (b) above, which were treated, modified and/or supplemented so as to form a gel. For example, a gel-forming component, such as silica particles, may be added to a solvent or ionic-liquid based electrolyte. This preferably results in the formation of a gellified or quasi solid state electrolyte.

According to an embodiment, the device of the invention comprises a solvent and/or ionic liquid based electrolyte comprising a redox mediator, also referred to as redox couple, redox-active species or redox shuttle. The redox couple comprises thus at least two forms, an oxidized one and a reduced one. The two forms may be separately prepared or synthesized and added both to the electrolyte. In the case of the iodide/triiodide (I⁻/I₃⁻) redox couple, (not being part of the invention) iodine and iodide are generally added to a solvent, resulting in generation of I₃⁻. The electrolyte may also comprise further additives, such as, for example compounds like LiClO₄, tert-butyl pyridine, chenodeoxycholic acid and guanidinium thiocyanate to tune the surface electronic properties of the semiconductor, and/or tetracyanoborate and/or other additives, for example for improving the efficiency and stability of the cell. Said charge transport medium comprises an electrolyte comprising a single electron redox couple. A single electron redox couple is a redox couple in which the transfer of a single electron creates the oxidized species that is generally regenerated at the counter electrode. The conversion of oxidized to reduced form or reduced to oxidized form involves one electron with one step elementary process and hence the system is referred to as single electron redox couple. The iodide/triiodide (I⁻/I₃⁻) redox couple is not a single electron redox couple. Preferably, the electrolyte of the device of the invention is thus preferably substantially or completely free of the iodide/ triiodide redox couple. Without wishing to be bound by theory, the present inventors believe that single electron redox couples are particularly advantageous, in particular if used in combination with the metal oxide layer on the semiconductor surface in accordance with the invention. The kinetics of recombination of electrons in the semiconductor to the oxidized form of the redox couple, in a single electron redox mediators is generally faster. So, the metal oxide overlayer on the semiconductor surface can be considered advantageous for the single electron redox systems. Said single electron redox couple is selected from inorganic metal complexes or organic molecules, metal complexes, in particular ferrocene complexes, cobalt complexes, organic molecules thiolates, and TEMPO (2,2,6,6-tetramethyl-1-piperidinyloxy), 2,2'7,7'-tetrakis-(N,N-di-*p*-methoxyphenyl-amine)-9,9'-spirobifluorene (spiro-MeOTAD), further and/or other liquid holetransporting materials, hole - Conductive Polymer P3HT, and Poly(3,4-ethylenedioxythiophene). The synthesis and working principle of the TEMPO redox couple is disclosed by Zhipan Zhang et al., Adv. Funct. Mater. 2008, 18, 341-346.

According to a preferred embodiment, the single electron redox couple comprises and/or is based on a cobalt complex. Exemplary and/or suitable cobalt-complex based redox couples have been reported in the art, such as, for example, in WO 03/038508, Feldt, S. et al., J. Am. Chem. Soc. 2010, 132, 16714-16724, and in co-pending European patent applications EP11156029.8, filed on February 25, 2011, and EP11161954.0, filed on April 11, 2011. In such complexes, the cobalt atom comprises one or more ligands generally comprising a five and/or six-membered aromatic heteroring comprising at least one nitrogen atom. For example, the ligands may comprise a pyridine ring, a bi-pyridine, or pyridine ring bound (preferably by way of a single bond) to at least another, separate N-containing five- or six-membered heteroring. The rings that form or are part of the ligands may be substituted. The aforementioned patent documents are entirely incorporated herein by reference.

According to an embodiment, said single electron redox couple comprises a cobalt complex in an organic solvent or ionic liquid, or the complex as a gel form or as a melt.

The device of the invention may preferably comprise a counter electrode. The counter electrode faces the charge transport medium towards the inside of the cell, and for example to a substrate towards (in direction of) the outside of the cell, if such substrate is present. The counter electrode generally comprises a catalytically active material, suitable to provide electrons and/or fill holes towards the inside of the device. The counter electrode may thus comprise one or more materials selected from (the group consisting of) Pt, Au, Ni, Cu, Ag, In, Ru, Pd, Rh, Ir, Os, C, conductive polymer and a combination of two or more of the aforementioned, for example. Conductive polymers may be selected from polymers comprising polyaniline, polypyrrole, polythiophene, polybenzene, polyethylenedioxythiophene, polypropylenedioxythiophene, polyacetylene, and combinations of two or more of the aforementioned, for example.

The counter electrode may be connected to an electrically conducting material, such as the current collector mentioned above, with respect to the side of the device containing the semiconductor electrode. Depending on how the working principle of a DSC is explained or defined, the term "hole collector" may be used in the literature for the electrically conducting contact at the counter electrode. In this case, the term "electron collector" as well as "current collector" may be used more specifically for the semiconductor electrode only (see above). For the purpose of the present invention, the term "current collector" is preferably also used for the electrically conducting material used at the counter electrode. The current collector at the semiconductor electrode may thus be termed "first current collector" or "semiconductor electrode current collector", and the current collector at the counter electrode may be termed "second current collector" or "counter electrode current collector", in accordance with the invention. This electric contact is preferably also provided in the form of a layer. For example, the counter electrode may be connected in series to a conductive metal oxide coated on a plastic or glass substrate, such as (ITO), fluorine doped tinoxide (FTO), ZnO-Ga₂O₃, ZnO-Al₂O₃, tin-oxide, SrGeO₃, antimony doped tin oxide (ATO) and zinc oxide, which may be coated on substrate, for example a transparent substrate, such as plastic or glass.

Depending on the choice of the DSC device type with respect to the entry of the light (front or back illumination), the substrate carrying the counter electrode and/or the current collector type conducting material is preferably transparent. This applies in particular to back illuminated cells, where the light enters the cell first through the side of the counter electrode. This is often the case in flexible devices (Seigo Ito et al., Chem. Commun. 2006, 4004-4006). It is clear that only the side on which light enters the device needs preferably or absolutely to be transparent. For example, in back illuminated cells, the substrate carrying the semiconductor electrode does not necessarily need to be transparent. "Transparent", "transparency", and the like, preferably refers to or encompasses transparency with respect to all, a major part of (more than 50%), at least 85% of or a part of visible light.

In the device of the invention, a metal oxide layer is provided on said semiconductor material and/or said semiconductor electrode. The metal oxide layer is provided on the (meso)porous surface of the semiconductor material and/or electrode. This metal oxide layer is also referred to and/or functions as an insulating and/or blocking layer. Alternatively or in addition, one can also say that the metal oxide layer passivates the semiconductor surface.

Accordingly, the metal oxide of said metal oxide layer is preferably in contact or provided on the porous surface said semiconductor material.

According to claim 1 said metal oxide layer has a thickness of 0.2 to 0.8 nm, preferably 0.3 to 0.7 nm, most preferably 0.4 to 0.6 nm.

The thickness of the metal oxide layer is preferably such that a tunnelling of the electrons of the photo-excited dye into the semiconductor material is still possible. Tunnelling is only possible if a certain thickness of the layer is not exceeded. In this case, electrons can go through the metal oxide layer, as they are not or only to a minor or acceptable extent prevented from transferring to the semiconductor material. Interestingly, although transfer and/or tunnelling from the excited dye to the semiconductor material is possible, the metal oxide or blocking layer prevents the electron from moving back from the semiconductor to the oxidized dye and/or to the redox couple in the electrolyte. In order to efficiently reduce or prevent such back-reaction and/or charge recombination, the metal oxide layer needs to have a certain thickness. Preferably, the thickness of the metal oxide layer is preferably ≥ 0.3 nm, more preferably ≥ 0.4 nm, for example ≥ 0.5 nm thick. The thickness of the metal oxide layer may be determined as discussed elsewhere in this specification.

It is noted that although the present specification distinguishes, for the purpose of clarity, between the metal oxide layer and the (porous) semiconductor material or electrode, it is noted that the semiconductor electrode may also comprise or consist essentially of a metal oxide.

According to a preferred embodiment, said metal oxide in said metal oxide (blocking) layer has a conduction band position (E_{C}) that is higher than the conduction band position (E_{C}) of said semiconductor material. The expression "conduction band position" more specifically refers to the energy of the conduction band, or the energy that an electron must have to be able to transfer to the conduction band. The conduction band position is thus indicated by the symbol E (eV), which stands for the energy of the electron. In the literature, also the expression "conduction band edge" is used.

The position of the conduction band is generally a material constant or characteristic that can be accurately determined using ultraviolet photoelectron spectroscopy (UPS). In some sources, the term photo emission spectroscopy (PES) is used alternatively to the UPS. In addition to UPS, electrochemical methods are also being used. However, the latter methods employ solvents and salts which affect the exact number and are thus less preferred. A suitable UPS method for determining and comparing the conduction band position is disclosed, for example, by Wang-Jae Chun et al., "Conduction and valence band positions of Ta2O5, TaON, and Ta3N5 by UPS and electrochemical methods", J. Phys. Chem B 2003, 107, 1798-1803. For TiO₂ conduction band position determination by UPS, one may refer to the procedure disclosed by L. Gundlach et al. "Dynamics of photoinduced electron transfer from adsorbed molecules into solids" Appl. Phys. A 88, 481-495 (2007).

Preferably, the conduction band position of a given material is determined on the absolute vacuum scale (AVS). Semiconductor materials generally have conduction band positions lying in the range of -2.5 to -6 eV with respect to vacuum, which means the conduction band edge lies 2.5 to 6 eV below the vacuum level.

For a compilation of E_{C} values of many different semiconducting metal oxide and metal sulfide minerals see: Yong Xu and Martin Schoonen "The absolute energy positions of conducting and valence bands of selected semiconducting minerals" American Mineralogist, 85, 543-556, 2000. In this reference, TiO₂ was found to have a calculated E_{C} (E_{CS}) value of -4.21 eV.

The inventors believe that a difference of 100meV of the conduction band position (preferably in the vacuum) between the semiconductor material (e.g. of the semiconductor anode) and the metal oxide of the metal oxide (blocking) layer can be sufficient to prevent the back reaction. Preferably, the metal oxide of the blocking layer is selected from the materials indicated in this specification so that it has a conduction band position that is at least 0.1 to 0.3 eV, preferably 0.1 to 0.2 eV above the conduction band of the semiconductor material, but preferably even higher, such as up to 1eV, preferably up to 1.5 eV more and more preferably up to 2eV more positive than the conduction band position of the semiconductor electrode.

More preferably, the conduction band position of the metal oxide layer is preferably at least 0.5 eV, more preferably at least 0.6 eV, even more preferably at least 0.8eV and most preferably at least 1 eV more positive than the conduction band position of the semiconductor material, for example of the semiconductor electrode. The difference of the conduction band positions may thus lie in the ranges of 0.1 to 3eV; preferably 0.2 to 2.5 eV; 0.3, 0.5, or 0.6 to 2.0eV, and most preferably 0.8 to 2eV difference.

For example, taking In₂O₃ as an exemplary metal oxide not according to the invention for the blocking layer (conduction band position of -3.88 eV/Vacuum) and TiO₂ as a semiconductor material (-4.2 eV /vacuum), the injection of electrons from LUMO to the TiO₂ conduction band can occur by a process that is called, 'step-wise injection'. The LUMO level of dye may often be situated at around - 3.4 eV/vacuum. The electrons at an energy of -3.4 eV will be injected into the -3.88 eV of the In₂O₃ and then to -4.2 eV of TiO₂. In this example, there is a difference of 0.32 eV (-3.88eV - -4.2 eV = 0.32 eV) between the conduction band positions of In₂O₃ (more positive) and TiO₂, respectively). Whereas if Ga₂O₃ (-2.95 eV/Vacuum) is used, the electrons from LUMO of the dye have to tunnel through the metal oxide, because the electron cannot travel uphill from -3.4 eV to -2.95 eV (-2.95eV - -4.2eV = 1.25eV difference).

The blocking layer and the semiconductor electrode are not be made from the same material, in particular in a given device, because a difference in the conduction band position between the materials is preferred. According to an embodiment, the difference as specified elsewhere is required. The metal oxide is not and/or does not comprise, and/or is substantially or totally free of Aluminium oxide, in particular, alumina (Al₂O₃).

The present inventors observe that alumina is disadvantageous for use as a blocking layer on a porous semiconductor surface. Without wishing to be bound by theory, the inventors have evidence that it is difficult to obtain conformal and/or regular growth of Al₂O₃ on semiconductor surfaces. It seems that Al₂O₃ deposited by atomic layer deposition (ALD) leads to aggregates and/or irregular surface structures, for example clusters. Currently, the deposition of Al₂O₃ does not fulfill the requirement of an even and/or regular layer, preferably of substantially constant thickness on the semiconductor surface. Therefore, results obtained in the prior art on the basis of alumina coatings on TiO₂ nanoparticle film electrodes did not yield good results in overall cell performance. Said metal oxide in said metal oxide layer is selected from and/or comprises Ga-oxide, in particular Ga₂O₃.

For the purpose of the present specification, the expression "substantially consists of" encompasses situations where further materials or elements may be present, making up to 30 wt.%, preferably up to 20 wt.%, more preferably up to 10 wt.% and most preferably up to 5 wt.%. In a preferred embodiment, the expression "substantially consists of" means "consists of", which means the any other element and/or material is substantially or completely absent.

The metal oxide (blocking) layer is applied and/or provided on said semiconductor material by way of subsequent application of different and/or separate layers of less than about 0.2 nm, for example ≤ 0.1 nm thickness each.

In accordance with the invention, each layer of less than about 0.2 nm is preferably applied by way of a two- or more (multi) step process. By substantially repeating the multistep step process several times, the overall metal oxide layer in the device of the invention is obtained. Each multistep process step may be referred to as a cycle, wherein the final or overall metal oxide layer is obtained by a number of cycles.

According to an embodiment, the metal oxide (blocking) layer is applied and/or provided on said semiconductor material by way of atomic layer deposition (ALD).

Atomic layer deposition is a well-established process allowing for the deposition of layers with thicknesses in the sub-nanometer range. A review article about this technology is Markku Leskelä and Mikko Ritala, "Atomic Layer deposition (ALD): from precursors to thin film structures", Thin Solid Films 409 (2002) 138-146. The technology generally allows for control of the layer thickness on an atomic scale. ALD is generally a multicycle process.

For ALD, generally a reactor is used, which is preferably a flow type reactor, which makes pulsing and purging possible (See Lasklelä and Ritala 2002 above).

In accordance with ALD, a metal precursor is put in contact with the surface of the semiconductor material and/or electrode. More specifically, a metal precursor is pulsed into the reactor which contains the semiconductor material and/or electrode. The metal precursor generally comprises the metal atoms and ligands, which may be purely organic with different carbon and optionally heteroatoms of nitrogen, phosphorus, oxygen, sulfur, silane, etc., but which may also be inorganic, for example comprising halogen (preferably chloride or iodide), for example. Generally, metal halides and organo-metallic precursors, in particular, metal alkyls, metal alkyl amides, metal alkoxides, metal diketonates, metal cyclopentadienyls, metal amidinates and so forth, can be used as precursors, for example.

Examples of precursors are AlMe₃ (Me = -CH₃) for the production of an aluminium oxide layer and/or coating. The tris(dimethyl amido)gallium dimer (TDMAGa, Ga(NMe₂)₃, which may be used for the production of Ga₂O₃ layers as shown in the examples. Diethylzinc (ZnEt)₂) may be used for producing ZnO layers, tetrakis(dimethylamino)tin (Sn(NMe₂)₄) may be used for producing SnO₂ layers, niobium pentethoxide (Nb(OEt)₅) may be used for producing a Nb₂O₅ layer, tetrakis(dimethylamino)hafnium (Hf(NMe₂)₄ for producing HfO₂, as disclosed in Tétreault et al., ECS Transactions 41 (2) 303-314 (2011). For producing TiO₂, Titanium iodide, titanium ethoxide, titanium isopropoxide were used as reported in (Lasklelä and Ritala 2002). Of course, these are just exemplary precursors, and the skilled person is aware of or may develop further precursors suitable for the purpose of the present invention. In this regard, Lasklelä and Ritala 2002 contains a chapter on precursor chemistry, which may be used when designing a precursor for a specific metal oxide layer.

In accordance with the method of the invention, the semiconductor electrode is brought in contact with the precursors. The precursor containing the metal atom may also be referred to as metal precursor or first precursor. For example, the metal precursor may be provided in the gaseous or in a liquid phase, so as to effectively expose the entire semiconductor surface (on the respective side of the layer) to the precursor. For example, the contact with a gaseous phase containing the metal precursor may take place at a temperature of 100-400°C, for example 140-350°C, in particular 150-300°C. In general, the temperature is chosen so as to allow the metal precursor to be present in the gaseous phase in sufficient amounts. The temperature thus depends on the metal precursor chosen, and may thus be selected so as to be equal to or is higher than the boiling point or, if applicable, the sublimation temperature of the precursor. If the precursor is present in sufficient amounts in the gaseous phase also at temperatures below the boiling/sublimation point, lower temperatures may be chosen, of course.

At the surface of the semiconductor electrode, a chemical reaction takes place with the metal precursor. In the first place, the precursor may bind through one of its ligands to an available group at the surface of the semiconductor. For example, the metal precursor binds to free OH groups that are present on the surface, which applies in the case of the TiO₂ surface, but not necessarily to the surface of other semiconductor materials, which may present different groups suitable for reaction with the precursor. In the course of the reaction, the metal of the metal precursor may generally bind to the oxygen of the semiconductor and the ligand is split off, for example hydrolysed during this step. During this step, in case of metal oxides, the oxygen atom of the -OH group of the semiconductor material binds to the metal atom contained in the metal precursor. In other words, the ligand of the precursor is split off, together with the hydrogen of the -OH group. Accordingly, the metal precursor reacts with the surface hydroxyl groups of the semiconductor material.

The exact reactions taking place depend on the type of semiconductor material used and on the nature of the precursor.

Following the contacting and reaction of the semiconductor surface with the precursor, unreacted precursors and byproducts (for example the byproduct of the hydrolysis, HX, X being the ligand of the metal precursor) are purged out. For example, an inert gas in purged into the reactor to remove the excess unreacted metal precursors and the by-product of the reaction.

At this stage, the metal of the precursor has occupied preferably all or nearly all or most of free or available -OH groups on the semiconductor surface, so that a substantially monomolecular layer has been formed on the surface of the semiconductor material of the porous semiconductor electrode. This procedure thus in principle allows for a very uniform, regular and /or even (in particular in terms of thickness) coating on the semiconductor electrode.

In a further step, a second precursor is introduced. In the case of the preparation of a metal oxide, the second precursor is usually the oxidizing precursor, may conveniently be water or ozone. This precursor may also be termed oxidizing precursor in case a metal oxide layer is to be provided. When contacted with the already partially reacted metal precursor now covalently bound to the surface of the semiconductor material, the remaining ligands of the precursor are split of and exchanged with a ligand formed from the second precursor, here - OH groups. In the case of reaction with water, the original precursor ligands are hydrolysed and metal oxides are created, with further free -OH groups. During this step, also M-O-M bonds between the metals (M) of the metal precursor bound on the semiconductor surface may be formed.

The oxidizing precursor generally completes the oxidation reaction.

After reaction of the second precursor, the unreacted second precursor and the byproducts are also purged out.

The reaction with the second precursor completes the formation of a first cycle of ALD, ideally creating a substantial monoatomic or monomolecular metal oxide layer on the surface of the semiconductor.

The process may be repeated until a specific thickness of the metal oxide layer is obtained. In particular, as the formation of the first metal oxide layer has created free -OH groups, one can again apply the same metal precursor (or first precursor) as used in the first cycle.

The cycles may be repeated as many times as necessary to obtain a desired metal oxide layer thickness. Generally, one layer (one cycle) may have a thickness in the range of about 0.03 to less than 0.2 nm, preferably 0.05 to 0.15nm., more preferably 0.07 to 0.12 nm. The thickness of one layer (one cycle) is determined by estimation as described in the examples. In the examples, the deposition rate of the metal oxide on Si wafer after 100 and 50 cycles by spectroscopic ellipsometry (Sopra GES 5E, fitted to a Tauc-Lorentz function) and extrapolation to get the thickness of 1 cycle is described. In ALD, the term "rate" refers to the thickness of a layer per cycle.

In accordance with the present invention, the inventors found a number of cycles that produces an optimal result in terms of the objectives of the invention. Accordingly, if the overall metal oxide layer is too thin (for example, corresponding to only 1 cycle of ALD), the recombination of electrons is not effectively reduced. On the other hand, if the metal oxide layer is too thick (for example, corresponding to 8 or more cycles) the transfer of the electrons from the photo-exited dye to the semiconductor can no longer take place. In this latter case, a tunnelling of the electrons through the metal oxide blocking layer is no longer possible. This is reflected by decreasing current of the cell.

Surprisingly, the inventors found that the best results were obtained if 1 to 7, preferably 2 to 6, more preferably 3 to 5 and most preferably 4 cycles were conducted by ALD. Therefore, according to claim 1 said metal oxide in said metal oxide layer comprises 3 to 4 distinct ALD-deposited metal oxide layers (cycles). In particular with 4 layers the best results are obtained in the context of the exemplary experiments conducted by the inventors. It is noted here that the term "layer" may be used, in this specification, at the same time for the situation where a layer is created by one ALD cycle (monolayer), and for the entire "metal oxide layer", the latter generally being the result of several cycles of ALD and thus of "distinct ALD-deposited metal oxide layers". From the context, the skilled person will understand if the term "layer" as used in this specification refers to the single layer (or monolayer) obtained by a single ALD cycle or to the entire, overall and/or multilayer metal oxide layer in the final device and finally obtained, for example, by applying two or more cycles of ALD, in accordance with the methods according to the invention or the present disclosure.

Accordng to an embodiment, step 2 of the method of the invention is repeated most preferably 4 times, and wherein said metal oxide layer thereby obtained is a metal oxide multilayer.

According to an embodiment, said complete (and/or overall and/or multilayer) metal oxide layer has a thickness of 0.2 to 0.8 nm.

It is noted that following the application of the last metal oxide (mono-) layer (such as after the last ALD cycle), the resulting semiconductor electrode comprising the overall metal oxide blocking layer is preferably not sintered. Heat treatments with temperatures generally above 250°C, preferably above 300°C and even above 350°C are generally used for sintering the semiconductor nanoparticles forming the semiconductor electrode. In the case of the metal oxide layer, the inventors found that such sintering or comparable steps of heat treatment could damage the uniformity and regularity of the metal oxide layer. Therefore, the sintering or heat treatment as indicated above may be performed before applying the metal oxide layer, but not thereafter. Thereafter, following application of the metal oxide (blocking) layer, any heat treatment at temperatures as indicated above is preferably absent.

After completion of the (entire) metal oxide layer, the semiconductor electrode comprising the metal oxide layer is preferably cleaned, for example by oxygen plasma.

It is noted that the expression "semiconductor electrode", for the purpose of the present specification, is used for the semiconductor material devoid of the metal oxide (blocking) layer provided thereon as well as the semiconductor electrode comprising the blocking layer as defined herein. The reason is that the semiconductor electrode can function as such also in the absence of the blocking layer. The blocking layer is very thin and does not substantially change the structural aspect (porosity) of the surface or of the overall function of the semiconductor electrode. Therefore, the term "semiconductor electrode" is generally completed with "comprising the metal oxide layer" or it is otherwise made clear from the context if the semiconductor electrode (or surface) with or without the blocking layer is referred to. In the literature, the expressions "photoanode", "working electrode" and/or "light absorption layer" may also be used for the entire entity comprising the semiconductor material, possibly a blocking layer as well as the adsorbed dye, since this is the functional unit that is responsible for light absorption and charge separation in a DSC.

For the purpose of producing a DSC, one or more dyes and/or sensitizers (also referred to as "sensitizing dye") is provided on the electrode comprising the metal oxide layer, in particular on the surface metal oxide layer.

Many different types of dyes have so far been proposed for DSCs. In general, there are metal complex-based dyes (organometallic) and/or metal complexes (for example ruthenium complexes), porphyrins and phthalocyanines with different metals and organic dyes. For the purpose of the invention, it is in principle possible to use any type of dyes, including combinations of different types of dyes or different dyes of the same type.

According to an embodiment, the dye may be selected from organometallic compounds, such as ruthenium dyes and related compounds, such as disclosed for example, in EP0613466, EP0758337, EP 0983282, EP 1622178, WO2006/038823, WO2009/107100, WO2010/055471 and WO2011/039715.

According to another, preferred embodiment, the dye is an organic dye. Exemplary organic dyes are those disclosed in WO2009/098643, EP1990373, WO2007/100033 for example. An organic dye was also used in the co-pending European patent application no. EP111161954.0 filed on April 4, 2011. A completely new class of organic dyes is disclosed in co-pending European patent application no. PCT/IB2011/054628, filed on October 18, 2011.

It is noted that organic dyes and/or dyes comprising a single anchoring group are particularly preferred for the purpose of the present specification. In particular, the combination of a metal oxide layer provided on the porous semiconductor electrode, an organic dye provided on said metal oxide blocking and a single electron redox shuttle is particularly advantageous. Without wishing to be bound by theory, the present inventors believe that this combination is at least in part responsible for the high V_{OC} values, the almost absent reduction of J_{SC} and the high charge collection efficiency (up to and even more than 90%) reported with the devices disclosed in the examples.

The dye may be applied on the surface of the metal oxide layer as is conventional. For example, the dye adsorbs on the surface when the surface is contacted with a solvent in which the dye is contained. For example, the semiconductor electrode with the metal oxide layer thereon may be dipped into a solvent in which the dye is dissolved or suspended. Thereafter, the dyed electrode may be washed.

Surprisingly, in the context of the present invention, the dye is sufficiently and efficiently adsorbed on the surface of the metal oxide layer, which means of the modified and/or passivated semiconductor surface. The modification of the surface does thus not result in a reduced dye adsorption.

A DSC is assembled as is conventional, for example by melt-sealing the photoanode comprising the metal oxide blocking layer and the dye and the counter electrode. A suitable electrolyte may be injected, for example by vacuum back filling technique through a hole sand blasted at the side of the counter electrode. Industrial scale production of DSCs has also been reported in the literature and may use different materials, components and/or different steps of assembling the device.

With respect to the uses of the invention, the precursor material comprising a metal is preferably used for the preparation of a blocking and/or insulating layer on or at the surface of a semiconductor material of a DSC.

Preferably, the metal oxide is preferably used as a blocking and/or insulating layer on the surface of a semiconductor electrode of a DSC.

The present invention will now be illustrated by way of examples. These examples do not limit the scope of this invention, which is defined by the appended claims.

### Examples:

### Example 1: Preparation of a dye, redox shuttle and TiO2 semiconductor material

### Synthesis of the Y123 dye

All the solvents and reagents are of puriss grade and are used as obtained. The full synthetic procedure of Y123 dye has already been disclosed by Tsao, H.N., et al., Cyclopentadithiophene bridged donor-acceptor dyes achieve high power conversion efficiencies in dye-sensitized solar cells based on the tris-cobalt bipyridine redox couple, ChemSusChem. 4, 591-594 (2011).

### Synthesis of single electron redox shuttle based on [Co(bpy-pz)₂](PF₆)₂ and [Co(bpy-pz)₂](PF6)₃

This type redox shuttle was also used in co-pending applications EP11156029.8, filed on February 25, 2011, and EP111161954.0, filed on April 11, 2011, respectively.

The bipyridine-pyrazole ligand (bpy-pz) is synthesized as follows: tBuOK (2g) was added to a suspension of pyrazole (1 g) in dmso (80 mL) and stirred until a clear solution has formed. 6-chloro-2,2'-bipyridine (1g, from HetCat) was added slowly by portion and the mixture heated at 140 °C for 14 hours. After cooling down to room temperature, water was added and the precipitate filtered and washed with water. The compound was further purified by silica gel chromatography column using Ethyl acetate/diethyl ether as eluent, leading to an off-white crystalline solid (450 mg, yield 39 %). Spectroscopic analysis were as reported in the literature (Inorg. Chem. 1991, 30, 3733).

[Co(bpy-pz)2](PF6)₂ is prepared as follows: 2. 91 mg (0.382 mmol, excess) of CoCl2 · 6H2O were dissolved in 25 mL of water while, in another flask, 93 mg (0.418 mmol) of bipyridine-pyrazole ligand was dissolved in 25 mL of acetone. The solutions were combined and heated to 55°C for 2h. Then 400 mg of NH4PF6 dissolved in 100 mL of water were added to the mixture. The mixture was stored overnight at 3 °C for precipitation. Then the product was collected on a sintered glass frit and dried in vacuo. The pure product was obtained as orange solid. Yield: 95 mg (0.12 mmol, 57%). 1H NMR (400 MHz, acetone-D6): d 112.95 (s, 2H, ArH), 91.83 (s, 2H, ArH), 89.23 (s, 2H, ArH), 75.68 (s, 2H, ArH), 69.31 (s, 2H, ArH), 66.22 (s, 2H, ArH), 43.00 (s, 2H, ArH), 40.74 (s, 2H, ArH), 19.01 (s, 2H, ArH), 13.61 (s, 2H, ArH) ppm. HRMS (ESI-TOF) m/z (%): calcd. for C26H20CoN8PF6 648.0785; found 648.0805 (17) [(M - PF6)+]; calcd. for C26H20CoN8: 251.5571; found 251.5565 (100) [(M -2PF6)2+].

[Co(bpy-pz)2](PF6)₃: 530 mg (2.22 mmol, excess) of CoCl2 · 6H2O were dissolved in 25 mL of water while in another flask 550 mg (2.47 mmol) of the bipyridine-pyrazole ligand were dissolved in 15 mL of acetonitrile. The solutions were combined and H2O2 (4 mL, 30%) and HCl (4 mL, 37%) were added to oxidize the cobalt. The mixture was heated to 50°C for 3h. A small aliquot (1 mL) was taken out and the product precipitated by adding aq. KPF6 solution. The solid was collected, dried and analyzed by NMR. The oxidation was complete and saturated aq. KPF6 solution was added to the reaction mixture to precipitate the product. The solid was collected on a glass-frit, washed with water and Et2O and dried in vacuo to obtain the pure product as orange solid. Yield: 355 mg (0.38 mmol, 31%). 1H NMR (400 MHz, acetone-D6): d 9.42 (dd, 3JHH = 3.2 Hz, 4JHH = 0.4 Hz, 1H, ArH), 9.35 (t, 3JHH = 8.2 Hz, 1H, ArH), 9.27 (dd, 3JHH = 8.0 Hz, 4JHH = 0.8 Hz, 1H, ArH), 9.01 (dd, 3JHH = 8.3 Hz, 4JHH = 0.8 Hz, 1H, ArH), 8.99 (ddd, 3JHH = 8.0 Hz, 4JHH = 1.4 Hz, 4JHH = 0.4 Hz, 1H, ArH), 8.46 (td, 3JHH = 7.8 Hz, 4JHH = 1.3 Hz, 1H, ArH), 7.93 (br d 3JHH = 5.9 Hz, 1H, ArH), 7.84 (dd, 4JHH = 2.4 Hz, 4JHH = 0.4 Hz, 1H, ArH), 6.87-6.86 (m, 1H, ArH) ppm. 19F NMR (188 MHz, acetone-D): d -72.3 (d, 1JPF = 707 Hz, PF6) ppm. HRMS (ESI-TOF) m/z (%): calcd. for C26H20CoN8P2F12 793.0427; found 793.0436 (35) [(M - PF6)+]; calcd. for C26H20CoN8PF6 648.0785; found 648.0869 (4) [(M - 2PF6)+]; calcd. for C26H20CoN8: 251.5571; found 251.5524 (100) [(M -3PF6)2+].

### Snythesis of semiconductor material for photoanode

The anatase titanium oxide colloid is synthesized using the procedure described by Ito, S., et al., Fabrication of thin film dye sensitized solar cells with solar to electric power conversion efficiency over 10 %, Thin Solid Films 516, 4613-4619 (2008).

The particle size is 20 nm and BET surface area is 82 m²/g. The titania colloid is made into a paste by mixing terpineol with two kinds of ethyl cellulose having different viscosities. The paste is screen printed onto a TCO glass (NSG 10, Nippon sheet glass, Japan) followed by a series of sintering steps (325 °C for 5 min with 15 min ramp time, 375 °C for 5 min with 5 min ramp time, 450 °C for 15 min with 5 min ramp time and 500 °C for 15 min with 5 min ramp time). The sintered films are used as photo-anodes. The thickness of the printed film was measured using KLA Tencor alpha-step 500 surface profiler and is found to be 2.7±0.1 µm

### Preparation of a metal oxide blocking layer by atomic layer deposition (ALD)

The ALD was carried out using a Cambridge Nanotech Savannah S100 apparatus using a method detailed by Tetreault, N., et al., Atomic layer deposition for novel dye-sensitized solar cells, ECS Transactions 41, 303-314 (2011). To summarize, the atomic, layer-by-layer deposition was carried out using successive pulses of tris(dimethyl amido)gallium dimer (TDMAGa, Ga(NMe₂)₃, Aldrich, Germany, 130°C) and deionized water (25°C) using nitrogen as a carrier gas (10 sccm). To ensure a conformal and uniform deposition throughout the photoanode pores, 30 s exposures to TDMAGa (100 ms pulse) and water (20 ms) the precursors are obtained using a stop valve regulating pumping of the vacuum chamber. Between 1 and 6 cycles (TDMAGa exp. / purge / H₂O exp. / purge) were applied to the photo-anodes corresponding to thicknesses between 0.097 nm and 1.166 nm as estimated by measuring the deposition rate of Ga₂O₃ on Si wafer after 100 (9.47 nm ± 0.23 nm) and 50 (4.92 nm ± 0.25 nm) cycles by spectroscopic ellipsometry (Sopra GES 5E, fitted to a Tauc-Lorentz function). A control electrode was subjected to identical conditions but without precursor pulses (as disclosed by Dezelah, C.L., et al., Atomic layer deposition of Ga2O3 films from a dialkylamido-based precursor, Chem. Mater. 18, 471-475 (2006)).

The valence state of blank Ti and Ga in bare and ALD treated substrates were probed using x-ray photoelectron spectrometer (XPS/ESCA KRATOS AXIS ULTRA) with A1 Kα X-ray radiation of 1486.7 eV. The optical properties of the sensitized reference and modified titania were investigated using a Cary 5 UV-Visible-NIR spectrophotometer (Australia) fitted. Electron injection dynamics were studied on the Y123 sensitized porous films using time-resolved single photon counting (TRSPC) technique with Horiba Jobin Yvon Fluorolog-3 spectrofluorometer (Japan) equipped with NANOLed 460 nm pulsed diode light source with the pulse duration of 1.2 ns and repetition rate of 1 MHz. A 610 nm high pass filter is used to exclude stray photon reaching the detector that can result from scattering.

### Example 2: Preparation of a Dye-Sensitized Solar Cell in Accordance with the Invention

The blank TiO₂ and Ga₂O₃ surface modified TiO₂ substrates of Example 1 were cleaned with oxygen plasma (Harrick plasma, USA) for 5 minutes and dipped-sensitized in 0.1 mM Y123 solution in 50/50 (v/v) acetonitrile/t-butanol mixture for 8 hours (see example 1 for the dye). The dyed electrode is then washed in acetonitrile to remove the loosely bound dye molecules before the cell assembly. The counter electrode is made by thermally depositing Pt at 410°C for 20 min from a 2mM H₂PtCl₆ (Aldrich, Germany) ethanolic solution drop casted on the FTO glass (TEC7, Solaronix, Switzerland). The two electrodes were melt sealed using a 25 µm thick surlyn™ (Dupont, USA) polymer film. The electrolyte used was a mixture of 200 mM Co²⁺ complex (Example 1), 50 mM Co³⁺ complex (Example 1), 100 mM LiClO₄ and 200 mM tert-butyl pyridine in acetonitrile solvent. This electrolyte is injected by vacuum back filling technique through a hole sand blasted at the side of the counter electrode.

### Example 3: Characterisation of the DSC of the invention

### Methodology

A 450W xenon lamp (Oriel, USA) was used as a light source. The spectral output of the lamp was filtered using a Schott K113 Tempax sunlight filter (Präzisions Glas & Optik GmbH, Germany) to reduce the mismatch between the simulated and actual solar spectrum to less than 2 %. The current-voltage characteristics of the cell were recorded with a Keithley model 2400 digital source meter (Keithley, USA). The photo-active area of 0.159 cm² was defined by a black metal mask. Incident photon-to-current conversion efficiency measurements were determined using a 300 W xenon light source (ILC Technology, USA). A Gemini-180 double monochromator Jobin Yvon Ltd. (UK) was used to select and increment the wavelength of the radiation impinging on the cell. The monochromatic incident light was passed through a chopper running at 1 Hz frequency and the on / off ratio was measured by an operational amplifier. This was superimposed on a white light bias corresponding to 10 mW/cm² intensity. The electron recombination and transport in the mesoporous film was measured by transient photo-voltage and photo-current decay measurements, respectively. The white light was generated by an array of LED's while a pulsed red light (0.05 s square pulse width) was controlled by a fast solid-state switch to ascertain rapid sub-millisecond rise of light perturbation. The current and voltage decay was recorded on a mac-interfaced Keithley 2602 source meter.

### Results

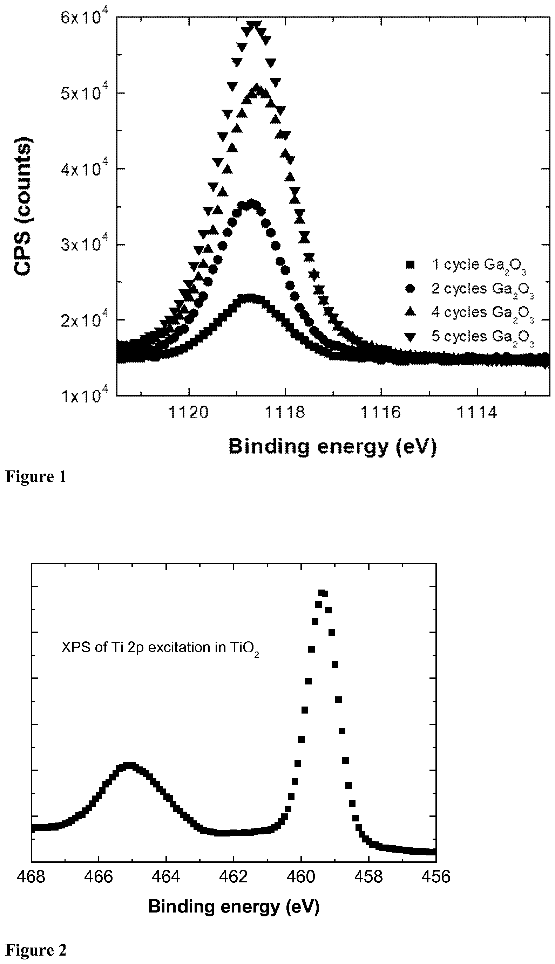

The reference and the gallium oxide passivated TiO₂ porous films were characterized using X-ray photoelectron spectroscopy. For the reference film, two peaks appeared at binding energies of 459.45 ± 0.15 eV and 465.05 ± 0.1 eV corresponding to the Ti 2p_{3/2} and Ti 2p_{1/2} transitions (*figure 2*), respectively indicating the presence of Ti with +4 oxidation state (Saied, S.O., et al., Vacuum 38, 917-922 (1988)).

The ALD surface modified films also have shown similar transitions attesting no change in the valence state of Ti. In addition, a peak appeared at 1118.65 ± 0.1eV for the surface treated films which are designated to the Ga 2p_{3/2} transition suggesting the presence of Ga and in +3 valence state (Schön, G., J. Electron Spectrosc. Relat. Phenom. 2, 75-86 (1973)) (*figure 1*).

Figure 1 shows the Ga 2p_{3/2} binding energy plot and it can be noted that with increasing the number of cycles of the deposition, the intensity of the peaks shoots up. This manifests the increase of the gallium content on the surface. The thickness of the gallium oxide ALD layer on the Si wafer is estimated using ellipsometry: 100 and 50 cycles of deposition result in the film thicknesses of 9.47±0.23nm and 4.92±0.25nm, respectively. This indicates that an oxide sub monolayer of 0.95Å per cycle is formed. However, the growth of the first few cycles is purely dependent on the surface chemistry of the substrate and there is a possibility of deviation of measured thickness on the Si as compared to the titania surface (Wang. J., et al., 34th IEEE Photovoltaic specialists conference(PVSC) 001988-111991 (2009)).

These passivated films were employed as photo anodes in DSC and the cells were made using our standard Y123 D-π-A sensitizer and Co(bpy-pyrazole) redox mediator (Tsao, H.N., et al., ChemSusChem. 4, 591-594 (2011)) (Example 2).

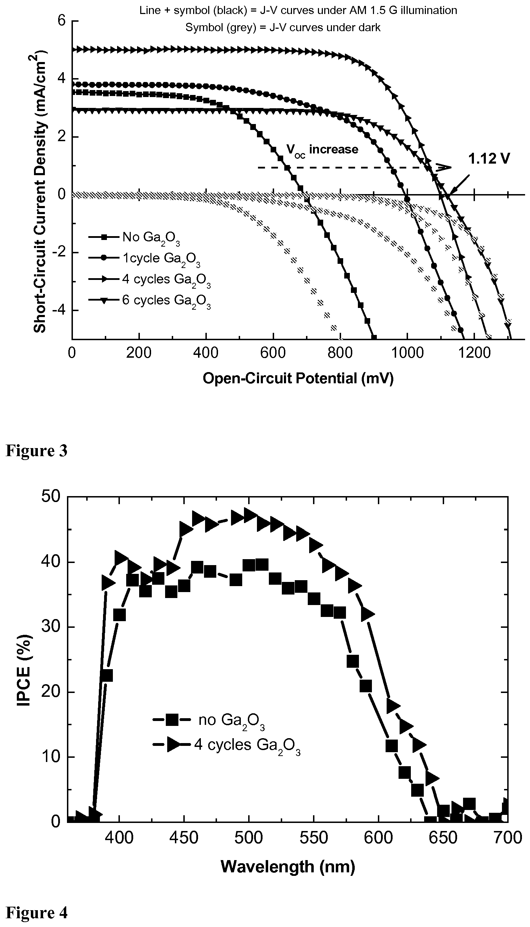

The J-V performances of these cells were measured in dark and at the AM 1.5G full sun conditions (*figure 3*). The onset of the dark current for the reference cell (grey curve with symbols) is observed at voltages lower than 400 mV with an exponential increase beyond. The deposition of the gallium oxide shifts the onset to higher voltages to as high as 900 mV which is 500 mV higher than the reference cell, thereby significantly blocking the dark current generation. Under illumination, the reference cell exhibits a power conversion efficiency of 1.4 % with J_{SC}= 3.6 mA/cm², V_{OC}=692.4 mV and ff. (fill factor) = 56.0 %. Already with one cycle of Ga₂O₃ layer, the V_{OC} increased to 1011.0 mV, J_{SC} to 4.9 mA/cm², and fill factor to 62.7 % doubling the efficiency to 3.2 %. Until 4 cycles, all the three photovoltaic parameters increased with a record enhancement of V_{OC} to 1100 mV leading to the PCE of 4.0 %. Further deposition, slightly raised the V_{OC} to 1118 mV but at a significant expense of the J_{SC} which deteriorated the efficiency. The fill factor is also improved dramatically from 56 % to 70 % with the passivation layer (*table 1*).

**Table 1: The photovoltaic parameters J_{SC}, V_{OC}, ff and the PCE for the reference cell and the Ga₂O₃ passivated cells.**

| **No of Cycles of Ga₂O₃** | **J_{SC} (mA/cm²)** | **V_{OC}(mV)** | **ff. (%)** | PCE **(%)** |
|---|---|---|---|---|
| 0 | 3.6 | 692.4 | 56.0 | 1.4 |
| 1 | 4.9 | 1011.0 | 62.7 | 3.2 |
| 2 | 4.8 | 1030.0 | 63.8 | 3.2 |
| 4 | 5.1 | 1098.0 | 70.8 | 4.0 |
| 5 | 2.7 | 1099.0 | 67.2 | 2.0 |
| 6 | 2.9 | 1118.0 | 68.6 | 2.3 |

The Incident Photon-to-electron Conversion Efficiency (IPCE) is measured for the photovoltaic cells over the range of wavelengths from 350 nm to 700 nm (*figure 4*)*.* The cell made with bare titania exhibits an absorbance rise from 380 nm with the maximum over 400 to 600 nm range and tailing back to zero at 650 nm. All the gallium oxide surface treated films also show similar profile but the maximum of IPCE increases to a maximum of around 50 % up to 4 cycles and then decreases. The trend observed with IPCE matches trend of J_{SC} and the integrated current from the spectra correlates closely with the photovoltaic data.

To investigate the evolution of the photovoltaic parameters, studies on the dye uptake and electron transfer properties were carried out. The UV-visible absorption spectrum is collected on the Y123 sensitized porous TiO₂ film with and without gallium oxide passivation and the spectra were plotted (not shown). All the curves exhibit similar absorption profiles and their intensities are the same within the experimental error. This result evidences no modification in the dye uptake due to the presence of the gallium oxide on the surface.

To analyze the kinetics of the photo-excited electron injection into the conduction band of the semiconductor, the fluorescence decay process is studied using time-resolved single photon counting technique (TRSPC) as proposed by Koops, S.E., et al., J. Am. Chem. Soc. 131, 4808-4818 (2009).

After the illumination by a laser light, all the excited electrons, in a non-injecting sensitized sample, have to relax back to its HOMO level radiatively or non-radiatively. The comparison of the amplitudes of the fluorescence between a non-injecting and an injecting sample with the surface modified films will give an idea of injection dynamics. We prepared fluorescence decay curves of the Y123 sensitized zirconia, titania and different Ga₂O₃ modified titania substrates (not shown). The optical density is matched for all the measured films to exclude any variations in the fluorescence intensities on the observed decay profiles and acquisition was carried out for 100s. The maximum intensity of the fluorescence on the ZrO₂ and TiO₂ are the extreme comparisons of the purely non-injecting and injecting mediums, respectively, and the amplitude for the former sample is five times higher than for titania. The titania surface treated with 1 cycle of Ga₂O₃ exhibits the fluorescence maximum slightly above the reference TiO₂ film indicating a slight decline in the electron injection. With increasing number of cycles the amplitude further increases approaching the non-injecting limits.

The ratio of intensity of reference to the intensity of Ga₂O₃ treated samples versus the number of cycles of ALD were studied (not shown). The ratios for the titania and zirconia are fixed at 1 and 0, respectively, indicative of the maximum possible and negligible injection of excited electrons. The increase in the layer thickness of gallium oxide on TiO₂ linearly shifts the ratio towards zero resulting from the insulation property of the former. All the decay profiles exhibit two distinct exponential fits, probably, leading from the biphasic injection. However, the fast component, in the order of few hundreds of picoseconds, contributes to the major part of the decay curve and hence the time-constant (t_{50%}) of the corresponding decay is used for comparison. The t_{50%} is the representative time for the decay of 50 % of the maximum amplitude on a deconvoluted fit. The reference sample exhibits a half-life time of 420±12 ps and up to 2 cycles of the Ga₂O₃ deposition, within the experimental error, no modification is observed. However, the deposition of more layers of Ga₂O₃ increases the value slightly to 445±9 ps for 3 cycles and a sudden increase to 533±1 ps and 650±10 ps for 4 and 5 cycles, respectively. The increase in the amplitude and the half-life time for the gallium oxide surface coated films confirms the reduction in the injection kinetics of the photo-excited electrons. The measured half-life time and the intensities on films, however, can vary in the presence of the electrolyte due to the competition between the regeneration of the dye, the electron injection and the capture of excited electrons from the LUMO of the dye by Co³⁺ species (Kelly, C.A., et al., Langmuir 15, 7047-7054 (1999)).

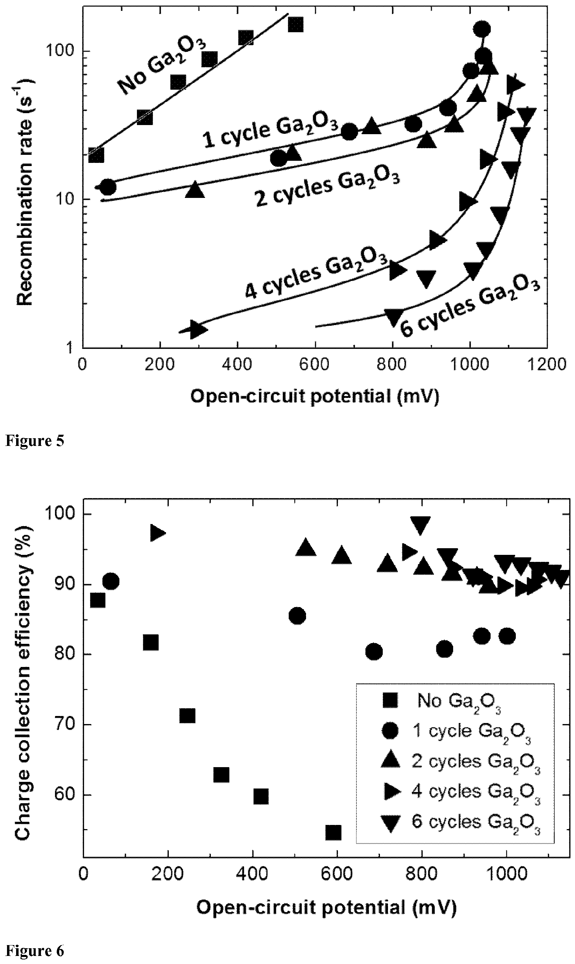

The ability of the insulating gallium oxide layer to act on the reverse unfavoured electron dynamics, i.e. the recombination of electrons, with the oxidized redox mediator is investigated using transient photo-voltage decay measurements. The plot of recombination rate versus the open-circuit potential at different light biases is shown in *figure 5**.* The distributions of the surface trap states are not affected by the deposition of the gallium oxide over layer and so the back reaction rate is compared against their V_{OC} (Peter, L.M., Phys. Chem. Chem. Phys. 9, 2630-2642 (2007)). At the operating voltages, just with one cycle of Ga₂O₃ deposition, the back reaction is lowered by almost one order of magnitude compared to the reference cell. The further increase in the layer thickness moderately decreases the electron transfer to the Co³⁺ by another order of magnitude until the 6^{th} cycle. Hence the enhancement in the electron life times (the inverse of the recombination rate) of the photo generated electrons at open-circuit, negatively shifts the quasi-Fermi level of the TiO₂ which leads to a dramatic increase of the V_{OC} from 692 mV to 1120 mV. However, the positive aspect along the side of recombination comes at the expense of the transport rate (*not shown*), at short-circuit, which decreases with gallium oxide passivation. A similar negative trend on the transport was observed previously, when substituting Ti by Ga in anatase titania lattice. The reason behind this decline is still not known and is under investigation (Chandiran, A.K., et al., J. Phys. Chem. C., 115, 9232-9240 (2011)).

The charge collection efficiency (η_{coll}), which cumulatively takes into account the transport and the recombination phenomena, defined by the ratio of transport rate to the sum of transport and recombination rate is plotted in *figure 6* (Peter, L.M., Phys. Chem. Chem. Phys. 9, 2630-2642 (2007)). For the reference cell, at voltages close to the zero, the η_{coll} is around 90 %. However, at the operating regime ca. ∼ 600 mV, the value is deteriorated to as low as 50 %. The deposition of 1 cycle of insulating layer shoots the number and is maintained between 80 and 90 %. Despite the loss in transport rate the efficiency of the charge collection increases as it is dominated by the blocking of recombination by the ultrathin Ga₂O₃ layer. With increasing number of cycles, the η_{coll} constantly increased and remained above 90 % over all the operating voltage conditions. This increase in the collection efficiency explains the J_{SC} increase in the DSC from 3.6 to 5.1 mA/cm² until 4 cycles. However, the decline along the 5^{th} and 6^{th} cycles can be attributed to excessive loss of injection of photo excited electrons (Antila, L.J., et al., J. Phys. Chem. Lett. 1, 536-539 (2010); Antila, L.J., et al., J. Phys. Chem. C. 115, 16720-16729 (2011)).

### Conclusion

The surface of the porous titania photo anode for DSC is passivated by a gallium oxide layer using ALD technique. The elemental analysis was carried out using XPS and observed transitions indicating the presence of Ga with +3 valence state. The Ti is present in +4 valence state in the reference sample and no changes are observed with the Ga₂O₃ deposition. The efficacy of this sub-nano meter thick passivation layer is investigated in dye sensitized solar cells with a standard D-π-A organic sensitizer and Co(bipyridine-pyrazole) complex. The presence of the Ga₂O₃ layer increases the open-circuit potential of the device from 690 mV to a new record of 1.1 V with 4 cycles together with an increase of short-circuit current density and fill factor. The kinetics of electron injection from the excited state of the dye to the conduction band of titania is studied using time-resolved single photon counting. The results indicate that the injection is lowered even with 1 cycle of deposition i.e. roughly a monolayer. However, the transient photo voltage study shows a drastic decrease of the electron recombination by more than an order of magnitude leading to such a record V_{OC}. Despite the observed loss in the injection efficiency, the J_{SC} increased until 4 cycles and this positive trend is ascertained to the better charge collection efficiency, which results from the decline in the charge recombination at short-circuit. This reduction of the recombination at short-circuit also explains the enhancement in the fill-factor. Further work involves the implementation of this technology to thicker TiO₂ films to harness the whole visible solar spectrum for high efficiency devices. This passivation technique clears up a route for the implementation of many existing redox mediators or hole conductors for high efficiency liquid- or solid state-DSC, which were prevented from being employed due to the fast recombination kinetics (Yanagida, S., Yu, Y., & Manseki, K., Acc. Chem. Res. 42, 1827-1838 (2009)).

In summary, the present inventors found a way to increase V_{OC} while keeping J_{SC} constant or even increasing in DSCs. By supplying an insulating or blocking layer, in particular comprising metal oxides as defined in the preferred embodiments, were able to reduce or prevent recombination of photo generated electrons with the oxidized species in the electrolyte. In the exemplary device disclosed above, a record open-circuit potential of 1.1 V was obtained, without losing the short-circuit current density.

## Claims

1. A dye-sensitized solar cell (DSC) comprising a semiconductor electrode, a counter electrode, a dye, and, between said semiconductor electrode and said counter electrode, a charge transport medium comprising an electrolyte comprising a single electron redox couple, wherein said semiconductor electrode comprises a porous semiconductor material and a blocking and/or insulating layer being a metal oxide layer provided on said porous semiconductor material, wherein the dye is adsorbed on said metal oxide layer, wherein the blocking layer and/or insulating layer and the semiconductor electrode are made from different material and wherein said single electron redox couple is selected from inorganic metal complexes or organic molecules, metal complexes selected from ferrocene complexes, cobalt complexes, organic molecules thiolates, and from TEMPO (2,2,6,6-tetramethyl-1-piperidinyloxy), 2,2'7,7'-tetrakis-(N,N-di-p-methoxyphenyl-amine)-9,9'-spirobifluorene (spiro-MeOTAD), other liquid hole transporting materials, hole-conductive polymer P3HT, and Poly(3,4-ethylenedioxythiophene) **characterized in that** said metal oxide layer comprises Ga-oxide, is free of aluminum oxide, has an overall thickness from 0.2 to 0.8 nm and comprises 3 to 4 distinct metal oxide layers having a thickness of less than 0.2 nm each.

2. The DSC of claim 1, wherein said single electron redox couple comprises a cobalt complex.

3. The DSC of any one of the preceding claims, wherein said metal oxide in said metal oxide layer has a conduction band position that is higher than the conduction band position of said semiconductor material.

4. The DSC of any one of the preceding claims, wherein said metal oxide is Ga₂O₃.

5. A method for manufacturing a dye-sensitized solar cell (DSC), said method comprising the steps of:
- providing a semiconductor electrode comprising a mesoporous surface, on which a blocking and/or insulating layer being a metal oxide layer having an overall thickness from 0.2 to 0.8 nm is provided by way of Atomic Layer Deposition (ALD), and wherein said metal oxide layer being free of aluminum oxide comprises 3 to 4 ALD-deposited metal oxide layers having a thickness of less than 0.2 nm each, said metal oxide being selected from Ga-oxide, the blocking layer and/or insulating layer and the semiconductor electrode being made from different material;
- applying, in particular adsorbing, a dye on said metal oxide layer;
- providing a counter electrode; and,
- providing, between said metal oxide layer having an overall thickness of 0.2 to 0.8 nm and said counter electrode, a charge transport medium comprisings an electrolyte comprising a single electron redox couple, wherein said single electron redox couple is selected from inorganic metal complexes or organic molecules, metal complexes selected from ferrocene complexes, cobalt complexes, organic molecules thiolates, and from TEMPO (2,2,6,6-tetramethyl-1-piperidinyloxy), 2,2'7,7'-tetrakis-(N,N-di-*p*-methoxyphenyl-amine)-9,9'-spirobifluorene (spiro-MeOTAD), other liquid hole transporting materials, hole-conductive polymer P3HT, and Poly(3,4-ethylenedioxythiophene).

## Patentansprüche

1. Farbstoffsensibilisierte Solarzelle (DSC), umfassend eine Halbleiterelektrode, eine Gegenelektrode, einen Farbstoff und zwischen der Halbleiterelektrode und der Gegenelektrode ein Ladungstransportmedium, das einen Elektrolyten umfasst, der ein Einelektron-Redoxpaar umfasst, wobei die Halbleiterelektrode ein poröses Halbleitermaterial und eine Sperr- und/oder Isolierschicht umfasst, die eine Metalloxidschicht ist, die auf dem porösen Halbleitermaterial bereitgestellt ist, wobei der Farbstoff auf der Metalloxidschicht adsorbiert ist, wobei die Sperrschicht und/oder Isolierschicht und die Halbleiterelektrode aus unterschiedlichem Material bestehen und wobei das Einelektron-Redoxpaar ausgewählt ist aus anorganischen Metallkomplexen oder organischen Molekülen, Metallkomplexen ausgewählt aus Ferrocenkomplexen, Cobaltkomplexen, organischen Thiolatmolekülen, und aus TEMPO (2,2,6,6-Tetramethyl-1-piperidinyloxy), 2,2',7,7'-Tetrakis-(N,N-di-*p*-methoxyphenylamin)-9,9'-spirobifluoren (spiro-MeOTAD), anderen flüssigen Löchertransportmaterialien, löcherleitendem Polymer P3HT und Poly(3,4-ethylendioxythiophen),
**dadurch gekennzeichnet, dass**
die Metalloxidschicht Ga-Oxid umfasst, frei von Aluminiumoxid ist, eine Gesamtdicke von 0,2 bis 0,8 nm aufweist und 3 bis 4 verschiedene Metalloxidschichten umfasst, die jeweils eine Dicke von weniger als 0,2 mm aufweisen.

2. DSC gemäß Anspruch 1, wobei das Einelektron-Redoxpaar einen Cobaltkomplex umfasst.

3. DSC gemäß einem der vorstehenden Ansprüche, wobei das Metalloxid in der Metalloxidschicht eine Leitungsbandposition aufweist, die höher als die Leitungsbandposition des Halbleitermaterials ist.

4. DSC gemäß einem der vorstehenden Ansprüche, wobei das Metalloxid Ga₂O₃ ist.

5. Verfahren zum Herstellen einer farbstoffsensibilisierten Solarzelle (DSC), wobei das Verfahren die Schritte umfasst:
- Bereitstellen einer Halbleiterelektrode, die eine mesoporöse Oberfläche umfasst, auf der eine Sperr- und/oder Isolierschicht, die eine Metalloxidschicht mit einer Gesamtdicke von 0,2 bis 0,8 nm ist, durch Atomschichtabscheidung (ALD) bereitgestellt ist, und wobei die Metalloxidschicht, die frei von Aluminiumoxid ist, 3 bis 4 ALD-abgeschiedene Oxidschichten mit einer Dicke von jeweils weniger als 0,2 nm umfasst, wobei das Metalloxid ausgewählt ist aus Ga-Oxid, wobei die Sperrschicht und/oder Isolierschicht und die Halbleiterelektrode aus unterschiedlichem Material bestehen;
- Aufbringen, insbesondere Adsorbieren, eines Farbstoffs auf die Metalloxidschicht;
- Bereitstellen einer Gegenelektrode; und
- Bereitstellen eines Ladungstransportmediums, das einen Elektrolyten umfasst, der ein Einelektron-Redoxpaar umfasst, zwischen der Metalloxidschicht mit einer Gesamtdicke von 0,2 bis 0,8 nm und der Gegenelektrode wobei das Einelektron-Redoxpaar ausgewählt ist aus anorganischen Metallkomplexen oder organischen Molekülen, Metallkomplexen ausgewählt aus Ferrocenkomplexen, Cobaltkomplexen, organischen Thiolatmolekülen, und aus TEMPO (2,2,6,6-Tetramethyl-1-piperidinyloxy), 2,2',7,7'-Tetrakis-(N,N-di-p-methoxyphenylamin)-9,9'-spirobifluoren (spiro-MeOTAD), anderen flüssigen Löchertransportmaterialien, löcherleitendem Polymer P3HT und Poly(3,4-ethylendioxythiophen).

## Revendications

1. Cellule solaire à colorant (DSC) comprenant une électrode semi-conductrice, une contre-électrode, un colorant et, entre ladite électrode semi-conductrice et ladite contre-électrode, un milieu de transport de charges comprenant un électrolyte comprenant un couple redox monoélectronique, dans laquelle ladite électrode semi-conductrice comprend un matériau semi-conducteur poreux et une couche de blocage et/ou d'isolation qui est une couche d'oxyde métallique disposée sur ledit matériau semi-conducteur poreux, dans laquelle le colorant est adsorbé sur ladite couche d'oxyde métallique, dans laquelle la couche de blocage et/ou la couche d'isolation et l'électrode semi-conductrice sont constituées d'un matériau différent et dans laquelle ledit couple redox monoélectronique est choisi parmi les complexes inorganiques ou les molécules organiques de métaux, les complexes métalliques choisis parmi les complexes de ferrocène, les complexes de cobalt, les thiolates de molécules organiques, et parmi le TEMPO (2,2,6,6-tétraméthyl-1-pipéridinyloxy), 2,2',7,7'-tétrakis(N,N-di-p-méthoxyphényl-amine)-9,9'-spirobifluorène (spiro-MeOTAD), les autres matériaux de transport de trous liquides, le polymère conducteur de trous P3HT, et le poly(3,4-éthylènedioxythiophène)
**caractérisée en ce que**
ladite couche d'oxyde métallique comprend de l'oxyde de Ga, est dépourvue d'oxyde d'aluminium, a une épaisseur globale de 0,2 à 0,8 nm et comprend 3 à 4 couches d'oxyde métallique distinctes ayant chacune une épaisseur de moins de 0,2 nm.

2. DSC de la revendication 1, dans laquelle ledit couple redox monoélectronique comprend un complexe de cobalt.

3. DSC de l'une quelconque des revendications précédentes, dans laquelle ledit oxyde métallique dans ladite couche d'oxyde métallique a une position de bande de conduction qui est plus haute que la position de la bande de conduction dudit matériau semi-conducteur.

4. DSC de l'une quelconque des revendications précédentes, dans laquelle ledit oxyde métallique est Ga₂O₃.

5. Procédé de fabrication d'une cellule solaire à colorant (DSC), ledit procédé comprenant les étapes consistant à :
- se procurer une électrode semi-conductrice comprenant une surface mésoporeuse, sur laquelle une couche de blocage et/ou d'isolation qui est une couche d'oxyde métallique ayant une épaisseur globale de 0,2 à 0,8 nm est disposée par dépôt de couches atomiques (ALD), et dans laquelle ladite couche d'oxyde métallique qui est dépourvue d'oxyde d'aluminium comprend 3 à 4 couches d'oxyde métallique déposées par ALD ayant chacune une épaisseur de moins de 0,2 nm, ledit oxyde métallique étant choisi à partir de l'oxyde de Ga, la couche de blocage et/ou la couche d'isolation et l'électrode semi-conductrice étant constituées d'un matériau différent ;
- appliquer, en particulier adsorber, un colorant sur ladite couche d'oxyde métallique ;
- se procurer une contre-électrode ; et
- disposer, entre ladite couche d'oxyde métallique ayant une épaisseur globale de 0,2 à 0,8 nm et ladite contre-électrode, un milieu de transport de charges comprenant un électrolyte comprenant un couple redox monoélectronique, ledit couple redox monoélectronique étant choisi parmi les complexes inorganiques ou les molécules organiques de métaux, les complexes métalliques choisis parmi les complexes de ferrocène, les complexes de cobalt, les thiolates de molécules organiques, et parmi le TEMPO (2,2,6,6-tétraméthyl-1-pipéridinyloxy), 2,2',7,7'-tétrakis(N,N-di-p-méthoxyphényl-amine)-9,9'-spirobifluorène (spiro-MeOTAD), les autres matériaux de transport de trous liquides, le polymère conducteur de trous P3HT, et le poly(3,4-éthylènedioxythiophène).
